(19) Europäisches Patentamt
European Patent Office
Office européen des brevets

(11) Numéro de publication: 0 158 540
B1

# (12) FASCICULE DE BREVET EUROPÉEN

(45) Date de publication du fascicule du brevet: **10.06.87**

(51) Int. Cl.⁴: **C 09 J 3/00**, C 08 F 255/02 // (C08F255/02, 216:12)

(21) Numéro de dépôt: **85400082.5**

(22) Date de dépôt: **18.01.85**

(54) **Compositions adhesives à reticulation thermoreversible et leurs applications.**

(30) Priorité: **31.01.84 FR 8401436**

(43) Date de publication de la demande: **16.10.85 Bulletin 85/42**

(45) Mention de la délivrance du brevet: **10.06.87 Bulletin 87/24**

(84) Etats contractants désignés: **AT BE CH DE GB IT LI LU NL SE**

(56) Documents cité: **GB-A-853 640**
**US-A-4 113 792**

(73) Titulaire: **ATOCHEM, 4 & 8, Cours Michelet La Défense 10, F-92800 Puteaux (FR)**

(72) Inventeur: **Augustin, Daniel, Corneville La Fouquetière, F-27300 Bernay (FR)**
Inventeur: **Leriche, Christian, Shuwa Tameike Building 3fl 2-4- 2, Nagata- Cho, Chiyoda- Ku Tokyo 100 (JP)**
Inventeur: **Poisson, Pierre, Le Mascrier, F-27300 Bernay (FR)**

EP 0 158 540 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1987

**Description**

Il est connu que des compositions à base de copolymères d'éthylène et d'un acide carboxylique à insaturation éthylénique ou bien des compositions à base de terpolymères d'éthylène, d'acide carboxylique à insaturation éthylénique et d'un ester d'un acide carboxylique à insaturation éthylénique ont de bonnes propriétés d'adhésion sur divers métaux tels que aluminium, acier, fer et sur d'autres supports tels que bois, cuir, caoutchcuc, matières céramiques.

Nous avons trouvé et, ceci fait l'objet de la présente invention, que l'on pouvait améliorer considérablement les propriétés adhésives de telles compositions par l'addition de faibles quantités de composés contenant au moins deux fonctions vinyl éther dans la molécule.

Les divinyl éthers utilisés comme promoteurs d'adhésion selon l'invention ont pour formule générale:

$CH_2 = CH - O - R - O - CH = CH_2$

et peuvent être obtenus par l'une quelconque des méthodes actuellement connues telles, par exemple, la vinylation des glycols.

Pour plus de détails sur leur préparation, on pourra se reporter aux articles généraux suivants:

- "Methoden der Organischen Chemie"
Houben Weyl 4th ed. Vol 6/3 p102
Georg Thieme Verlag Stuttgart 1965
- "Enol ethers - structure, synthesis and reactions"
de Peter Fischer dans supplement E "The chemistry of ether, crown ethers, hydroxylgroups and their sulphuranalogues"
Part. 2 Patai Editor, The chemistry of fonctional Groups.

Dans la formule générale ci-dessus R peut être aliphatique, aromatique ou cycloaliphatique:

$R = -(CH_2)-$ avec n = 1 à 6

$R = -CH_2-CH_2-O-CH_2-CH_2-$

$= -CH_2-CH_2-O-CH_2-CH_2-O-CH_2-CH_2-$

$= -CH_2-CH_2-O-CH_2-CH_2-O-CH_2-CH_2-O-CH_2-CH_2-$

R = 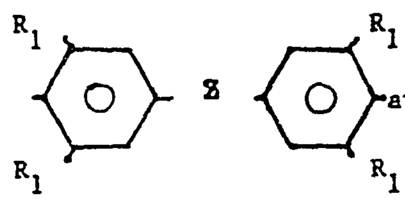 avec Z = - $CH_2$-

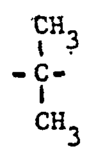 , 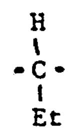 , 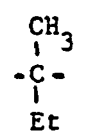

et $R_1$ = H, $CH_3$-, X (Cl, Brome, fluor).

R = 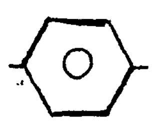 , 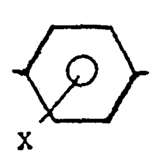 avec X = Chlore, brome, fluor

R = 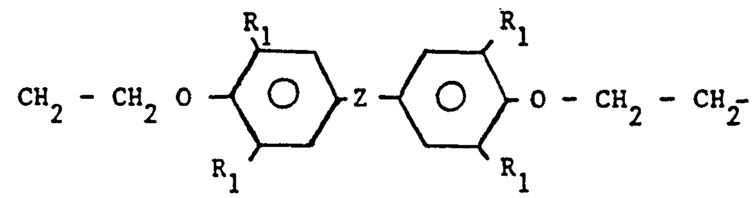

avec Z et $R_1$ ayant les mêmes significations que ci-dessus:

R = 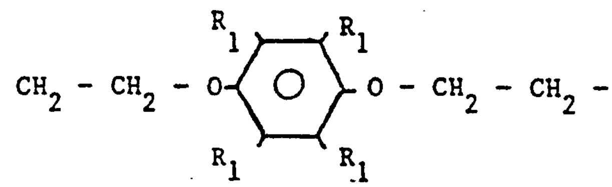

avec $R_1$ = H, $CH_3$ et X

R = 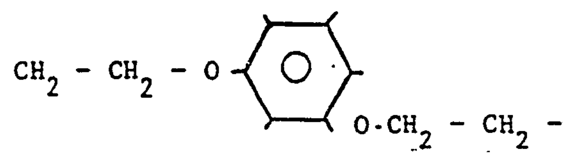

R = 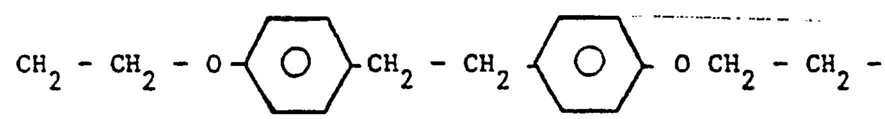

R = 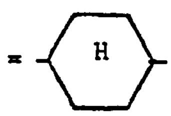

R = 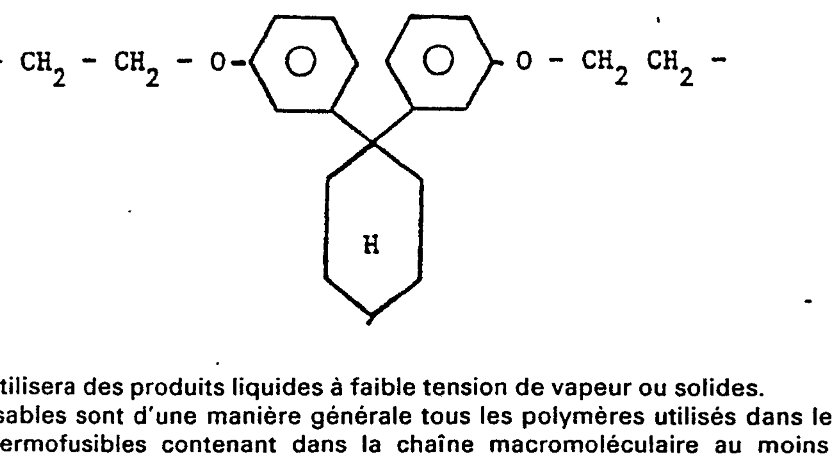

De préférence, on utilisera des produits liquides à faible tension de vapeur ou solides.

Les polymères utilisables sont d'une manière générale tous les polymères utilisés dans les formulations de colles et adhésifs thermofusibles contenant dans la chaîne macromoléculaire au moins un comonomère porteur d'une fonction acide carboxylique libre.

On peut citer plus particulièrement les copolymères de l'éthylène avec les acides monocarboxyliques à insaturation éthylénique. De tels acides sont l'acide acrylique, l'acide méthacrylique, l'acide crotonique, l'acide cinnamique, l'acide undécylénique.

On peut également faire usage des terpolymères de l'éthylène et de comonomères vinyliques ou acryliques où, l'un au moins, des comonomères est porteur de fonctions carboxyliques libres.

Des exemples de tels terpolymères sont les terpolymères d'éthylène, d'acétate de vinyle et d'acide acrylique.

- d'éthylène, d'acrylate de terbutyle et d'acide acrylique,
- d'éthylène, d'acide méthacrylique et de méthacrylate de métaux alcalins (Na, K), alcalino- terreux (Ca, Ba) et de zinc.
- d'éthylène, d'acide acrylique et de chlorure de vinyle.

D'une façon générale, on peut utiliser tout copolymère d'éthylène et d'acide monocarboxylique monoéthylénique, de préférence l'acide acrylique, qui comporte entre 1 et 50 % en poids d'un tel acide et mieux entre 3 et 10%.

On peut également utiliser des terpolymères constitués d'éthylène, d'un acide monocarboxylique à insaturation monoéthylénique et d'un ester d'un acide monocarboxylique à insaturation monoéthylénique ou tout autre comonomère vinylique ou acrylique, la teneur en acide monocarboxylique monoéthylénique devant être comprise entre 1 et 50% en poids d'un tel acide et mieux entre 3 et 10%.

Il y a intérêt à ce que les polymères qui seront additionnés de divinyléther soient assez fluides; ainsi, est-il recommandé d'utiliser des polymères d'indice de fluidité compris entre 1 et 100, de préférence entre 3 et 10 (par 10 minutes à 190° C sous une charge de 2,16 kg (norme ASTM D- 1238).

Pour évaluer les propriétés adhésives desdites compositions, on peut prendre l'exemple de collages, effectués sur des éprouvettes d'aluminium.

Ces collages sont réalisés à des températures comprises entre 200 et 250° C, mieux vers 230° C, sous différentes charges - 4 à bars - et pendant une durée déterminée.

Les forces de pelage F qui permettent de mesurer l'énergie nécessaire pour décoller l'assemblage ainsi réalisé sont déterminées à l'aide d'un dynamomètre à des températures allant de l'ambiante à 120° C.

Les compositions qui font l'objet de la présente invention ont des forces de pelage F qui sont quatre à cinq fois supérieures aux forces F des résines sans divinyléther.

Cette amélioration de l'adhésion des résines considérées est obtenue avec de faibles quantités de divinyléther comprises entre 0,1 et 5% en poids, mieux entre 0,5 et 2% en poids par rapport à la résine de base.

Cette amélioration des propriétés adhésives des compositions contenant un polymère porteur de fonctions acides libres et un composé ayant au moins deux fonctions vinyléther est attribuée à la réaction des fonctions acides avec les fonctions vinyléthers, réaction qui conduit à la réticulation du polymère porteur des fonctions acides.

La réaction des acides et des éthers-vinyliques qui conduit à un ester β éther (ou acylale) présente en outre, la caractéristique d'être thermoréversible c'est-à-dire qu'en élevant la température, l'acylale formé se décompose pour redonner les produits de départ. Si cette réaction est appliquée à un polymère, comme c'est le cas ici, cela signifie qu'en élevant la température, la réticulation par le divinyléther du polymère porteur de fonction acide disparait, et que, au contraire, il suffit d'abaisser la température pour que cette réticulation réapparaisse: la réticulation est dite thermoréversible.

Ceci peut-être illustré par le schéma suivant:

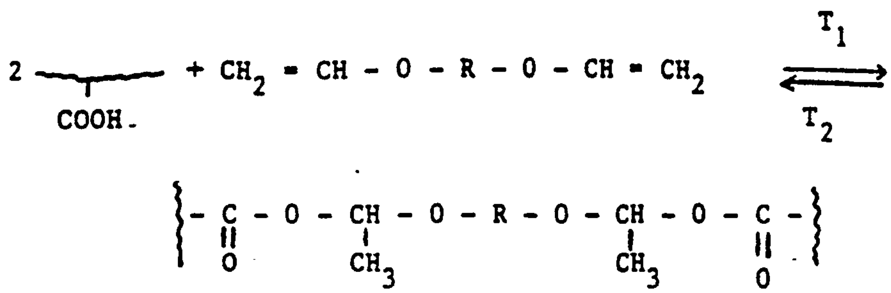


Ainsi, si on mélange dans un plastographe Brabender un polymère éthylène-acide acrylique avec un divinyléther de structure générale $CH_2 = CH - O - R - O - CH = CH_2$ ayant une tension de vapeur suffisamment faible pour que l'on puisse travailler à la fusion de la résine, on constate que le couple nécessaire pour malaxer le polymère augmente rapidement, indiquant ainsi une augmentation de la viscosité du milieu. Cette augmentation est plus ou moins rapide selon la quantité de fonctions acides estérifiés.

Cette augmentation de viscosité est due au fait que le divinyléther de structure générale indiquée ci-dessus crée des pontages entre les chaînes polymères sur lesquelles sont greffées au hasard des fonctions carboxyliques.

On peut fabriquer les compositions suivant l'invention par incorporation du divinyléther dans le polymère de base maintenu à l'état fondu - un bon malaxage est nécessaire pour obtenir une bonne homogénéisation ainsi

qu'une totale réaction. Il est préférable de travailler à des températures comprises entre 150 et 200° C.

On utilisera, de préférence, des polymères qui possèdent une bonne fluidité vers 160-170° C.

Si on augmente la température du milieu devenu très visqueux, on observe que le produit redevient fluide et tend vers la viscosité initiale de la résine utilisée.

En augmentant la température, on favorise, en effet, la réaction inverse de décomposition et on régénère les fonctions acides et vinyléthers. Ceci peut être aisément démontré par un moyen analytique quelconque tel que RMH du proton et du carbone 13 ou infrarouge.

La température de thermoréversibilité $T_2$ se situe entre 180 et 250° C en fonction des polymères et des divinyléthers utilisés.

Par refroidissement, sans aller jusqu'à la solidification, on observe à nouveau une augmentation de la viscosité qui est mesurée par une augmentation du couple du plastographe.

La thermoréversibilité de la réticulation a de nombreux avantages: si on applique la composition à température suffisamment élevée, elle devient très fluide ce qui permet un bon mouillage du support et, par refroidissement, il y a réticulation du joint, cette réticulation lui conférant de très bonnes propriétés mécaniques, une meilleure tenue au vieillissement et aux solvants ainsi, comme déjà dit, qu'une meilleure adhérence.

La composition selon l'invention permet donc de concilier à la fois la facilité d'application et le bon mouillage du support qui sont habituellement l'apanage des adhésifs thermofusibles contenant des polymères de haute fluidité, et les performances adhésives élevées qui caractérisent les formulations basées sur des polymères de forte viscosité.

On peut réaliser les compositions suivant l'invention en opérant dans tout appareil assurant un bon malaxage des deux constituants à l'état fondu, tel que: extrudeuse mono ou double vis, mélangeur à cylindres... il suffit d'opérer à une température celle qu'il n'y ait pas risque de blocage dans la machine par suite de viscosité trop élevée.

C'est ainsi que, dans une extrudeuse, on travaillera dans la première zône de la vis à 160-170° C et l'on augmentera progresivement la température vers la sortie de manière à abaisser la viscosité (en jouant sur la thermoréversibilité) de manière à permettre une extrusion aisée.

Les compositions décrites dans les exemples qui illustrent l'invention ont été réalisées à l'aide d'un plastrographe Brabender équipé d'un malaxeur à cylindres type 50 de contenance volumétrique égale à 60 $cm^3$ environ.

On pèse avec précision une quantité de résine comportant entre 1 à 50% en poids et mieux entre 3 et 10% d'un acide monocarboxylique monoéthylènique.

On l'introduit dans la cuve puis, après 10 minutes de malaxage à la température choisie, on ajuste l'échelle de sensibilité à 0. On choisit d'une façon générale l'échelle qui permet d'enregistrer le diagramme entier en continu.

On introduit ensuite une quantité précise de divinyléther qui est comprise entre 0,1 et 5% mieux entre 0,5 et 2% en poids par rapport à la résine. Ce pourcentage pondéral permet d'estérifier une proportion plus ou moins importante des fonctions carboxyliques libres de la résine. Les meilleurs résultats d'adhésion seront obtenus avec un pourcentage compris entre 1 et 50%, mieux entre 5 et 25 % de fonctions carboxyliques estérifiées.

On observe généralement une élévation rapide du couple qui atteint après quelques minutes une valeur maximale. On arrête l'essai dès que le produit réticulé présente une tendance à sortir de la cuve. Celui-ci est ensuite ucilisé pour réaliser des collages sur aluminium.

## CONDITIONS DE COLLAGE

Les essais de collage sont réalisés avec une soudeuse constituée de mâchoires thermorégulées de 25 mm de large à pression variable et équipées d'un temporisateur.

Le matériau utilisé pour les éprouvettes de collage est de la feuille d'aluminium recuit de 110 ± 10 µm d'épaisseur.

Les plaques - 120 x 120 mm - sont dégraissées préalablement dans un bain d'acétone.

On dépose sur un côté d'une plaque d'aluminium et sur une largeur de 25 mm une quantité de produit à tester puis on recouvre celle-ci par une seconde plaque et on introduit ces 2 plaques avec précision entre les mâchoires de la soudeuse.

L'excès du produit sera éliminé par la pression appliquée.

La figure 1 représente la plaque d'aluminium qui servira à réaliser les éprouvettes de traction.

Les conditions de collage sont reportées dans les exemples qui illustrent l'invention. La température de collage est comprise entre 200 et 250° C, mieux vers 230° C et correspond à la température à laquelle les liaisons sont rompues et le produit est fluide.

La réalisation des éprouvettes pour réaliser les mesures des forces de pelage F est effectuée comme suit: on découpe la plaque résultant du collage décrit ci-dessus en éprouvettes de collage de 20 mm de largeur sur 100 mm de longueur. On effectue 5 éprouvettes de ce type dans la plaque de collage, un bord de 10 mm de largeur étant éliminé.

Le schéma ci-après (figure 2) représente la façon d'obtention des éprouvettes pour collage.

On respecte ensuite un délai minimum de 12 heures entre le collage et le tractionnement.

## MESURES DES FORCES DE PELAGE F

Le tractionnement est réalisé sur un dynamomètre LHOMARGY type DY 07 à des températures comprises entre 20 et 120°C.

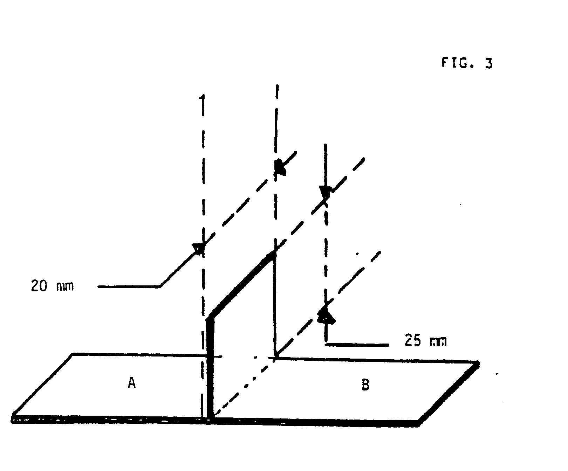

On fixe les extrémités libres A et B de la bande éprouvette dans les mâchoires de la machine d'arrachement (figure 3).

On met en température.

On écarte ensuite les mâchoires de la machine à une vitesse constante de 50 mm par minute.

Le diagramme enregistré donne la force nécessaire pour rompre la liaison.

Les forces de pelage F seront exprimées en déca Newtons par centimètre (da N/cm).

Les exemples qui suivent illustrent l'invention.

**Exemples 1 à 5**

## REALISATION DE LA COMPOSITION A PROPRIETE ADHESIVE AMELIOREE

On règle la température de l'huile d'un plastographe Bradender de façon à obtenir 165°C dans la cuve de réaction.

La vitesse de rotation des pales est de 60 tours par minute.

Ayant atteint la température de 165°C, on introduit 45 parties d'un terpolymère A (résine A), constitué de:
89% d'éthylène
7% d'acrylate de terbutyle
4% d'acide acrylique

Cette résine a une densité de 0,926 et un indice de fluidité de 6,5 g/10 minutes.

Après 10 minutes à 165°C, on règle l'échelle des couples à 0 puis on introduit rapidement 1,775 parties d'éther divinylique de butane diol $CH_2 = CH - O - (CH_2)_4 - O - CH = CH_2$. Ceci correspond à 3.8 % en poids de divinyl éther dans la composition. L'indice du plastographe s'élève très rapidement de 0 à 560.

On arrête l'essai. Le produit obtenu servira pour réaliser des collages sur aluminium.

On réalise d'autres compositions en faisant varier la quantité de divinyléther de butane diol.

Les compositions suivantes ont été réalisées:

| | | | | | | |
|---|---|---|---|---|---|---|
| Exemple 2: | 45 | parties | de résine | A | + 0,9 | partie de divinyléther de butane diol |
| Exemple 3: | 45 | " | " " | " | + 0,45 | partie de divinyléther de butane diol |
| Exemple 4: | 45 | parties | de résine | A | + 0,22 | partie de divinyléther de butane diol |
| Exemple 5: | 45 | " | " " | " | + 0,11 | partie de divinyléther de butane diol |

Des essais de collage sont réalisés avec les compositions précitées selon les conditions décrites dans le tableau 1.

Les essais de traction sont réalisés à 80°C.

Le tableau 1 ci-après rassemble les résultats obtenus. A titre comparatif nous avons réalisé un collage puis mesuré la force de pelage de la résine A vierge. On peut constater que les compositions obtenues avec le divinyléther du butane diol ont des forces de pelage F 3 à 4 fois supérieures à celles de la résine A.

Le meilleur résultat étant obtenu avec 1 % de divinyléther du butane diol (exemple 3), ceci correspond à 25 % des fonctions acides estérifiés.

D'autres conditions de collage et de tractionnement ont été réalisées avec les compositions des exemples 4 et 5.

Les résultats sont rassemblés dans le tableau 2.

On constate que dans ces conditions la composition de l'exemple 4 qui contient 0,5% de divinyléther de butane diol a une force de pelage F environ 4 fois supérieure à la force F de la résine A sans additif.

**Exemples 6 à 9**

Dans le même appareillage que celui décrit dans l'exemple 1 on réalise, à 165°C, des compositions avec la résine A et l'éther divinylique de diéthylène glycol:

$CH_2 = CH\text{-}O\text{-}CH_2\text{-}CH_2\text{-}O\text{-}CH_2\text{-}CH_2\text{-}O\text{-}CH = CH_2$(DVEDEG).

On introduit ainsi dans la cuve du plastographe portée à 165°C 60 parties de la résine A, puis après 10 minutes on introduit rapidement 1,3 parties de DVEDEG.

Ceci correspond à 2,12 % en poids de Divinyléther dans la composition.
Le couple du plastographe s'élève de 0 à 920 en 4 minutes.
Le produit blanc obtenu sera utilisé pour réaliser des collages sur aluminium.
D'autres compositions sont réalisées avec des teneurs variables en divinyléther du diéthylène glycol:

| | | | | |
|---|---|---|---|---|
| Exemple 7: | la composition contient | 1,07 % | en poids | de DVEDEG |
| Exemple 8: | " " " | 0,5 % | " " | " " |
| Exemple 9: | " " " | 0,3 % | " " | " " |

Des essais de collage sont réalisés avec les compositions des exemples 6, 7, 8 et 9 selon les conditions décrites dans le tableau 3.

Les essais de traction sont réalisés à 50° C et 80° C. Le tableau 3 rassemble les résultats. Le meilleure résultat est obtenu avec 0,5 % de DVEDEG ce qui théoriquement correspond à 12,5 % des fonctions acides estérifiés. De bons résultats sont également obtenus avec 1 % de divinylether, soit environ 25 % des fonctions acides esterifiés.

**Exemples 10 à 13**

Suivant le mode opératoire décrit dans l'exemple 1, on réalise des compositions avec la résine B qui possède les caractéristiques suivantes:
- 93,5% d'éthylène
- 6,5% d'acide acrylique.

Cette résine a une densité de 0,932, un indice de fluidité de 5,5 g/10 minutes et un point vicat de 85° C.

Dans la cuve du plastographe chauffée à 175° C, on introduit 45 parties de résine B. Après 10 minutes à cette température et après avoir réglé l'échelle à 0, on introduit 1,68 $cm^3$ soit 1,62 parties de divinyléther du diéthylène glycol (DVEDEG). Ceci correspond à 3,47 % en poids de divinyléther dans la composition.

L'indice du plastographe s'élève très rapidement à 550 (moins de 2 minutes). Le produit obtenu servira pour réaliser des collages sur aluminium.

D'autres compositions sont réalisées avec des teneurs décroissantes en DVEDEG:

| | | | | |
|---|---|---|---|---|
| Exemple 11: | la composition contient | 1,79 % | en poids | de DVEDEG |
| Exemple 12: | " " " | 0,90 % | " " | " " |
| Exemple 13: | " " " | 0,45 % | " " | " " |

Des essais de collage et de tractionnement sont réalisés avec les compositions des exemples 10, 11, 12 et 13.
Les résultats et conditions des essais sont reportés dans le tableau 4.
Les meilleurs résultats sont obtenus avec un pourcentage en DVEDEG inférieur à 1 % en poids.
Ainsi, avec 0,97 % soit 12,5 % des fonctions acides estérifiés, nous obtenons une force de pelage F à 80° C de 4,90 daN/cm. Cette force F est encore égale à 1,44 daN/cm à 100° C, c'est-à-dire plus de 4 fois supérieure à la force F de la résine vierge dans les mêmes conditions de collages et de tractionnement.

**Exemples 14 à 16**

Des compositions ont été réalisées suivant le mode opératoire décrit dans l'exemple 1 avec la résine B et le bis [para(vinyl-oxy-2 éthoxy)-phényl]-2,2 propane:

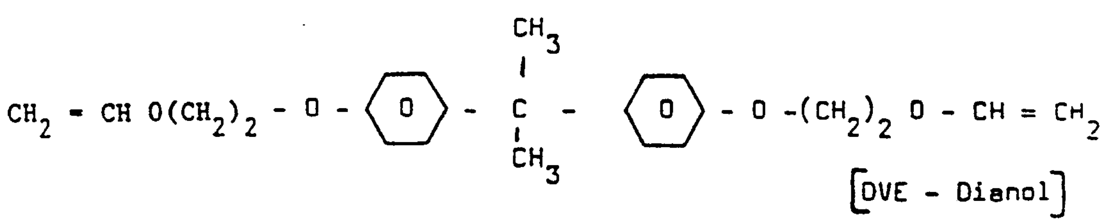

[DVE - Dianol]

Dans la cuve du plastographe chauffée à 174°C, on introduit 45 parties de résine B puis, après 10 minutes à cette température, on introduit 1,9 parties de DVE-Dianol. Ceci correspond à 4,05 % en poids de Divinyléther dans la composition.

L'indice du plastographe s'élève à la graduation 580 en moins de 3 minutes.

Le produit obtenu servira pour réaliser des collages sur aluminium.

D'autres compositions ont été réalisées avec des teneurs moins importantes en DVE-Dianol:

Exemple 15: la composition contient 1,96 % en poids de DVE-Dianol
Exemple 16: " " " 1 % en poids de DVE-Dianol

Des essais de collage et de tractionnement sont réalisés avec les compositions des exemples 14, 15 et 16. Les conditions et les résultats sont reportés dans le tableau 5.

Le meilleur résultat est obtenu avec 1% de DVE-Dianol ce qui correspond théoriquement à 6,25 % des fonctions acides estérifiés.

**Exemple 17:**

Une composition a été réalisée suivant le mode opératoire décrit dans l'exemple 1 en utilisant le SURLYN 1652 (SURLYN est une marque conmmerciale de la Société Du Pont de Nemours), qui est un terpolymère d'éthylène, d'acide méthacrylique et de méthacrylate de zinc.

Cette résine présente un indice de fluidité de 5, un point de fusion de 95°C.

Dans la cuve du plastographe chauffée à 162°C, on introduit 45 parties de cette résine puis après 10 minutes à cette température on introduit 0,5 partie du bis [para(vinyloxy- 2 éthoxy - phenyl-] 2,2 propane (DVE-Dianol).

Ceci correspond à 1,1 % en poids de DVE-DIANOL dans la composition.

L'indice du plastographe s'élève à la graduation 820 en 3 minutes 30 secondes.

Le produit obtenu servira pour réaliser des collages sur aluminium. Les conditions et résultats sont reportés dans le tableau 6.

| Exemple | Pourcentage de dininyléther dans la composition | Pourcentage de fonctions acides estérifiées | Conditions de collage | | | Essais de Traction | |
|---|---|---|---|---|---|---|---|
| | | | Température (°C) | Temps (secondes) | Pression (bars) | Température (°C) | F (da N/cm) |
| Comparatif | Résine A sans additif | 0 | 235 | 300 | 6 | 80 | 0,64 |
| 1 | 3,8 | 100 | 235 | 300 | 6 | 80 | 0,91 |
| 2 | 1,9 | 50 | 235 | 300 | 6 | 80 | 1,29 |
| 3 | 1 | 25 | 235 | 300 | 6 | 80 | 2,06 |
| 4 | 0,5 | 12,5 | 235 | 300 | 6 | 80 | 1,15 |
| 5 | 0,25 | 6,25 | 235 | 300 | 6 | 80 | 1,02 |

TABLEAU I : COMPOSITIONS ADHESIVES A BASE DE DIVINYLETHER DE BUTANE DIOL

| Exemple | Pourcentage de dininyléther dans la composition | Pourcentage de fonctions acides estérifiées | Conditions de collage | | | Essais de Traction | |
|---|---|---|---|---|---|---|---|
| | | | Température (°C) | Temps (secondes) | Pression (bars) | Température (°C) | F (da N/cm) |
| Comparatif | Résine A | 0 | 230 | 300 | 4 | 50 | 1,31 |
| 5 | 0,25 | 6,25 | 230 | 300 | 4 | 50 | 2,16 |
| 4 | 0,5 | 12,5 | 230 | 300 | 4 | 50 | 5,05 |

TABLEAU 2 : COMPOSITIONS ADHESIVES A BASE DE DIVINYLETHER DE BUTANE DIOL.

| Exemple | Pourcentage de dininyléther dans la composition | Pourcentage de fonctions acides estérifiées | Conditions de collage | | | Essais de Traction | |
|---|---|---|---|---|---|---|---|
| | | | Température (°C) | Temps (secondes) | Pression (bars) | Température (°C) | F (da N/cm) |
| Comparatif | Résine A sans additif | 0 | 230 | 300 | 4 | 50 | 1,3 |
| 6 | 2,12 | 50 | 240 | 300 | 4 | 50 | 3,43 |
| 7 | 1,07 | 25 | 240 | 300 | 4 | 50 | 4,38 |
| 8 | 0,5 | 12,5 | 240 | 300 | 4 | 50 | 4,68 |
| 9 | 0,3 | 7,5 | 230 | 300 | 4 | 50 | 4,13 |
| Comparatif | Résine A sans additif | 0 | 235 | 300 | 6 | 80 | 0,64 |
| 7 | 1,07 | 25 | 230 | 300 | 6 | 80 | 2,31 |
| 8 | 0,5 | 12,5 | 230 | 300 | 6 | 80 | 2,31 |

TABLEAU 1 : COMPOSITIONS ADHESIVES A BASE DE DIVINYLETHER DE DIETHYLENE GLYCOL

| Exemple | Pourcentage de dininyléther dans la composition | Pourcentage de fonctions acides estérifiées | Conditions de collage | | | Essais de Traction | |
|---|---|---|---|---|---|---|---|
| | | | Température (°C) | Temps (secondes) | Pression (bars) | Température (°C) | F (da N/cm) |
| Comparatif | Résine B sans additif | 0 | 245 | 300 | 6 | 80 / 100 | 1,37 / 0,31 |
| 10 | 3,47 | 50 | 245 | 300 | 6 | 80 | 0,406 |
| 11 | 1,79 | 25 | 245 | 300 | 6 | 80 | 1,45 |
| 12 | 0,90 | 12,5 | 245 | 300 | 6 | 80 / 100 | 4,90 / 1,44 |
| 13 | 0,45 | 6,25 | 245 | 300 | 6 | 80 / 100 | 3,95 / 2,11 |

**TABLEAU 4** : COMPOSITIONS ADHESIVES A BASE DE DIVINYLETHER DE DIETHYLENE GLYCOL.

| Exemple | Pourcentage de divinyléther dans la composition | Pourcentage de fonctions acides estérifiées | Conditions de collage | | | Essais de Traction | |
|---|---|---|---|---|---|---|---|
| | | | Température (°C) | Temps (secondes) | Pression (bars) | Température (°C) | F (da N/cm) |
| Comparatif | Résine B sans additif | 0 | 245 | 300 | 6 | 80 / 100 | 1,37 / 0,11 |
| 14 | 4,05 | 25 | 230 | 300 | 6 | 80 | 0,48 |
| 15 | 1,96 | 12,5 | 210 / 250 | 300 | 6 | 80 | 2,94 / 3,63 |
| 16 | 1 | 6,25 | 230 | 300 | 6 | 80 / 100 | 5,81 / 3,19 |
| 16 | 1 | 6,25 | 230 | 300 | 6 | 120 | 0,77 |

TABLEAU 5 : COMPOSITIONS ADHESIVES A BASE DE BIS[PARA (VINYLOXY - 2 ETHOXY) - PHENYL] - 2,2 propane

| Exemple | Pourcentage de dininyléther dans la composition | Conditions de collage | | | Essais de Traction | |
|---|---|---|---|---|---|---|
| | | Température (°C) | Temps (secondes) | Pression (bars) | Température (°C) | F (da N/cm) |
| Comparatif | SURLYN sans DVE-D | 150 | 300 | 6 | 80 | 1,91 |
| 17 | 1,1 | 230 | 300 | 6 | 80 | 2,6 |

TABLEAU 6 : COMPOSITION ADHESIVE A BASE DE BIS [PARA (vinyloxy - 2 éthoxy) - PHENYL] - 2,2 PROPANE, (DVE-DIANOL)

**Revendications**

1. Compositions adhésives à réticulation thermoréversible résultant de l'action d'un divinyléther de formule $CH_2 = CH - O - R - O - CH = CH_2$
R pouvant être aliphatique, aromatique ou cycloaliphatique,
sur un copolymère issu de la copolymérisation d'une oléfine avec un acide monocarboxylique à insaturation éthylénique et, éventuellement, un ester d'acide monocarboxylique à insaturation éthylénique,
avec les proportions respectives de 0,1 à 5 % en poids de divinyléther pour 99,9 à 95 % en poids de copolymère.

2. Compositions selon la revendication 1 caractérisées en ce que les proportions respectives de divinyléther et de copolymère sont de préférence 0,5 à 2% en poids de divinyléther et 99,5 à 98 % en poids de copolymère.

3. Compositions selon la revendication 1 ou 2 caractérisées en ce que le divinyléther appartient au groupe constitué par l'éther divinylique de l'éthylène glycol, l'éther divinylique du butane diol et le bis [para (vinyl) - oxy- 2 éthoxy) - phényl] 2,2 propane.

4. Compositions selon l'une des revendications 1 à 3 caractérisées en ce que le copolymère a un indice de fluidité de 1 à 100 grammes par 10 minutes de préférence de 3 à 10.

5. Compositions selon l'une des revendications 1 à 4 caractérisées en ce que l'acide carboxylique copolymérisé avec l'oléfine appartient au groupe constitué par les acides acrylique, méthacrylique et crotonique et qu'il constitue 1 à 50% du poids du copolymère, de préférence 3 à 10 %.

6. Compositions selon l'une des revendications 1 à 5 caractérisées en ce que le copolymère appartient au groupe constitué par le copolymère éthylène-acide acrylique et le terpolymère éthylène acrylate de terbutyle - acide acrylique.

7. Compositions selon l'une des revendications 1 à 6 caractérisées en ce que le copolymère possède une partie de ses fonctions carboxyliques salifiée par des atomes de calcium ou de zinc.

8. Procédé de fabrication des compositions selon l'une des revendications 1 à 7 caractérisé en ce que l'on malaxe ensemble divinyléther et copolymère à des températures comprises entre 150 et 200° C.

9. Application des compositions adhésives selon l'une des revendications 1 à 7 au collage de divers matériaux.

10. Application selon 9 caractérisée en ce que le collage est réalisé à une température comprise entre 200 et 250° C.

**Patentansprüche**

1. Klebstoffzusammensetzungen mit thermoreversibler Vernetzung erhalten durch Reaktion eines Divinylethers der Formel $CH_2 = CH - O - R - O - CH = CH_2$ wobei R ein aliphatischer, aromatischer oder cycloaliphatischer Rest sein kann, mit einem Copolymer, das durch Copolymerisation eines Olefins mit einer ethylenisch ungesättigten Monocarbonsäure und, gegebenenfalls, einem ethylenisch ungesättigten Ester einer Monocarbonsäure,
wobei die jeweiligen Gewichtsverhältnisse 0,1 bis 5 Gew.% an Divinylether für 99,9 bis 95 Gew.% des Copolymeren betragen.

2. Zusammensetzungen nach Anspruch 1, dadurch gekennzeichnet, daß die jeweiligen Verhältnisse von Divinylether zu Copolymer vorzugsweise 0,5 bis 2 Gew.% des Divinylethers und 99,5 bis 98 Gew.% des Copolymeren betragen.

3. Zusammensetzungen nach Anspruch 1 oder 2, dadurch gekennzeichnet, daß der Divinylether zur Gruppe bestehend aus dem Divinylether des Ethylenglykols, dem Divinylether des Butandiols und dem bis-2,2-Para(vinyl-2-Oxy-ethoxy)-phenyl -Propan gehört.

4. Zusammensetzungen nach einem der Ansprüche 1 bis 3, dadurch gekennzeichnet, daß das Copolymer einen Fluiditätsindex zwischen 1 und 100 vorzugsweise zwischen 3 und 10 g pro 10 Minuten hat.

5. Zusammensetzungen nach einem der Ansprüche 1 bis 4, dadurch gekennzeichnet, daß die mit dem Olefin copolymerisierte Carbonsäure zu der Gruppe bestehend aus den Acrylsäuren, Methacrylsäuren und Crotonsäuren gehört und daß sie zwischen 1 und 50 Gew.%, vorzugsweise zwischen 3 und 10 Gew.% des Copolymeren ausmacht.

6. Zusammensetzungen nach einem der Ansprüche 1 bis 5, dadurch gekennzeichnet, daß das Copolymere zu der Gruppe bestehend aus dem Copolymeren Ethylen-Acrylsäure und dem Terpolymeren Ethylen-Tertiärbutylacrylat-Acrylsäure gehört.

7. Zusammensetzungen nach einem der Ansprüche 1 bis 6, dadurch gekennzeichnet, daß ein Teil der Carbonsäurefunktionen des Copolymers als Calcium- oder als Zinksalz vorliegt.

8. Verfahren zur Herstellung der Zusammensetzungen nach einem der Ansprüche 1 bis 7, dadurch gekennzeichnet, daß man Divinylether und Copolymer bei Temperaturen zwischen 150 und 200° C unter Rühren vermischt.

9. Verwendung der Klebstoffzusammensetzungen nach einem der Ansprüche 1 bis 7 zum Kleben unterschiedlicher Stoffe.

10. Verwendung nach Anspruch 9, dadurch gekennzeichnet, daß das Kleben bei einer Temperatur zwischen

200 und 250° C ausgeführt wird.

## Claims

1. Adhesive compositions having thermally reversible crosslinking, resulting from the action of a divinyl ether of formula $CH_2=CH\text{-}O\text{-}R\text{-}O\text{-}CH=CH_2$
where R can be aliphatic, aromatic or cycloaliphatic,
on a copolymer derived from the copolymerization of an olefin with an ethylenically unsaturated monocarboxylic acid and, optionally, an ethylenically unsaturated monocarboxylic acid ester,
in the respective proportions of 0.1 to 5 % by weight of divinyl ether for 99.9 to 95 % by weight of copolymer.

2. Compositions according to Claim 1, characterized in that the respective proportions of divinyl ether and copolymer are preferably 0.5 to 2 % by weight of divinyl ether and 99.5 to 98 % by weight of copolymer.

3. Compositions according to Claim 1 or 2, characterized in that the divinyl ether belongs to the group consisting of ethylene glycol divinyl ether, butanediol divinyl ether and 2,2-bis {para-[2-(vinyloxy)ethoxy]phenyl} propane.

4. Compositions according to one of Claims 1 to 3, characterized in that the copolymer has a melt flow index of 1 to 100 grams per 10 minutes, and preferably of 3 to 10.

5. Compositions according to one of Claims 1 to 4, characterized in that the carboxylic acid copolymerized with the olefin belongs to the group consisting of acrylic, methacrylic and crotonic acids, and in that it constitutes 1 to 50 % of the weight of the copolymer, and preferably 3 to 10 %.

6. Compositions according to one of Claims 1 to 5, characterized in that the copolymer belongs to the group consisting of the copolymer ethylene/acrylic acid and the terpolymer ethylene/tert-butyl acrylate/acrylic acid.

7. Compositions according to one of Claims 1 to 6, characterized in that the copolymer possesses part of its carboxylic acid groups salified with calcium or zinc atoms.

8. Process for manufacturing compositions according to one of Claims 1 to 7, characterized in that divinyl ether and copolymer are kneaded together at temperatures between 150 and 200° C.

9. Application of the adhesive compositions according to one of Claims 1 to 7 to the bonding of various materials.

10. Application according to 9, characterized in that the bonding is carried out at a temperature of between 200 and 250° C.

FIG. 1

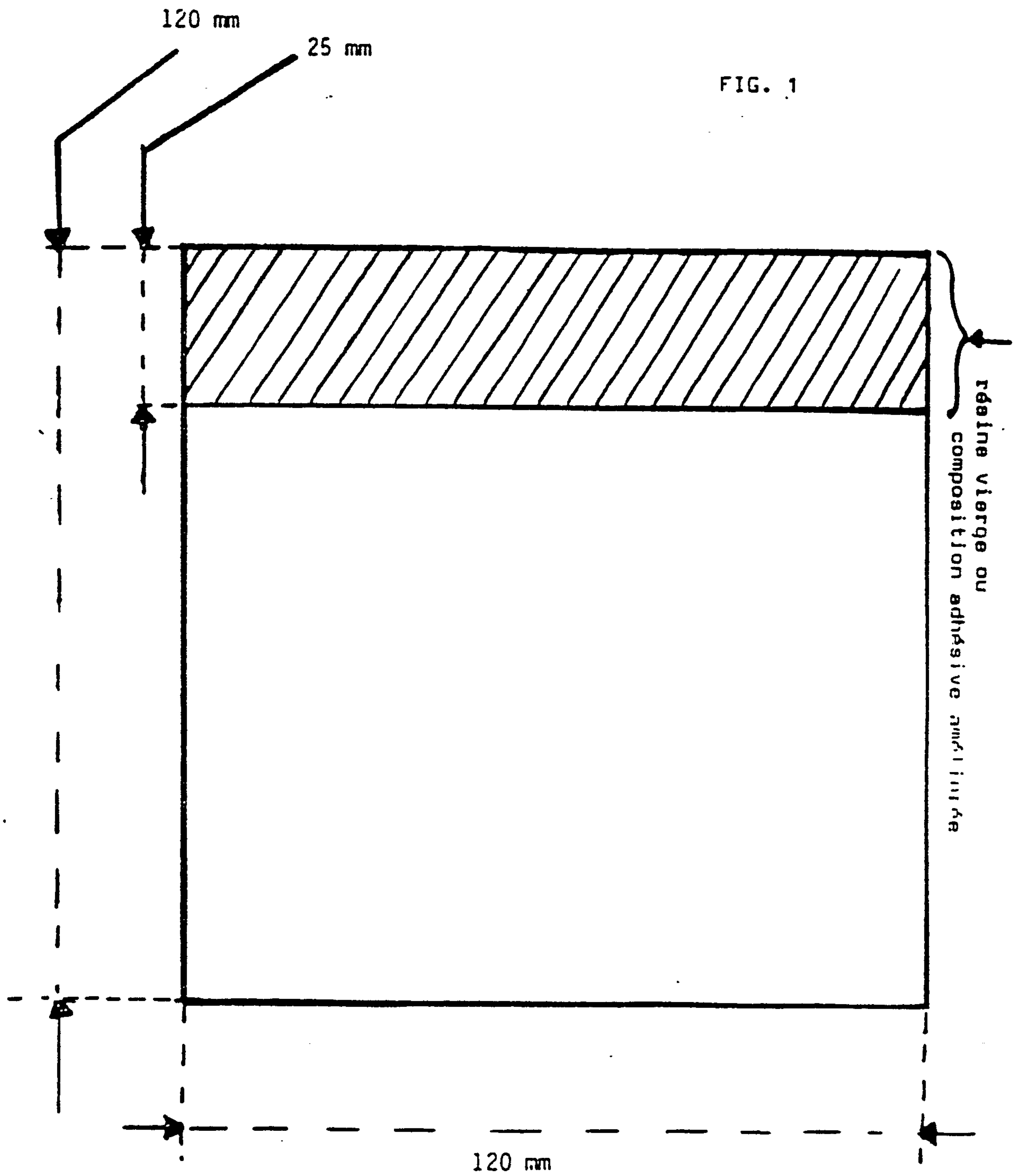


Plaque en aluminium

FIG. 2

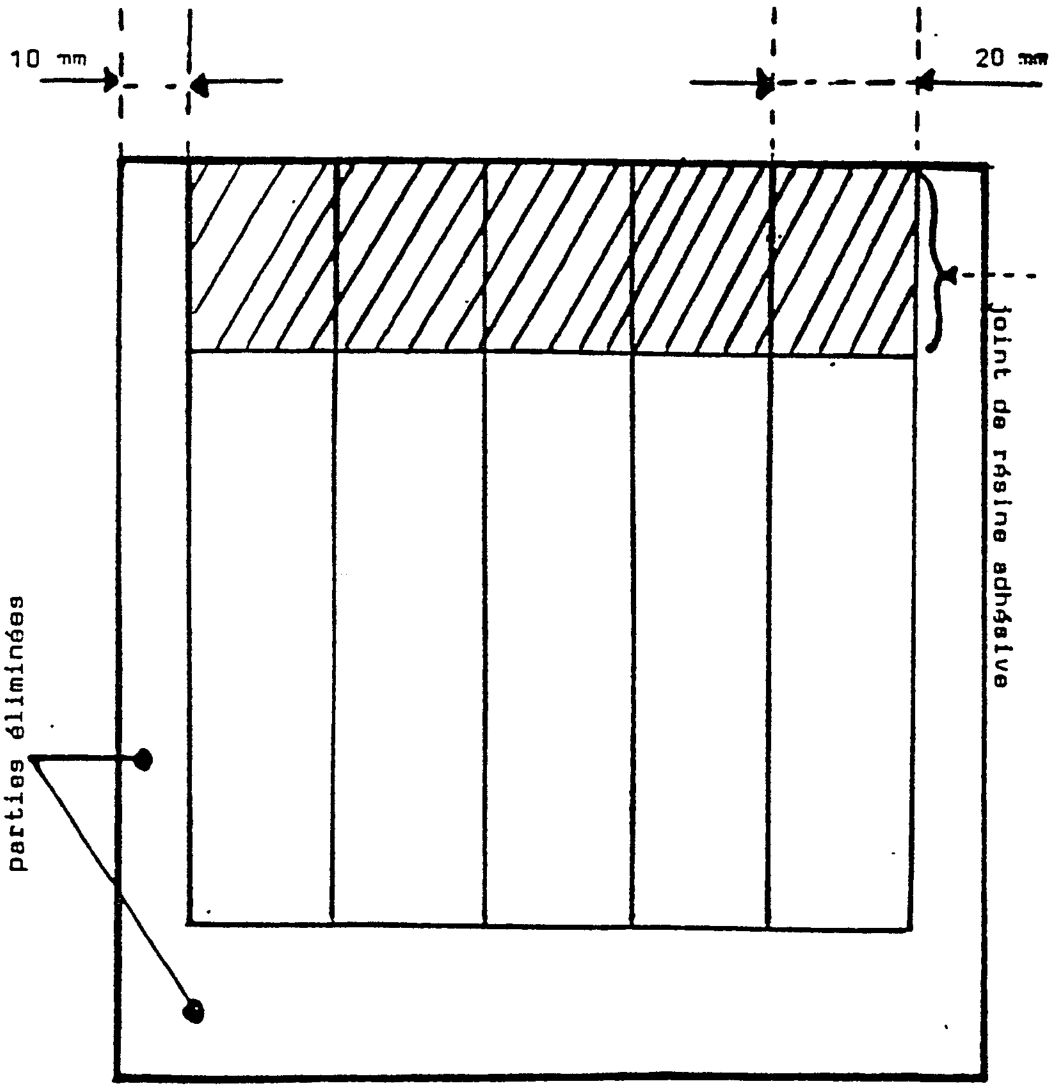

FIG. 3